# EUROPEAN PATENT APPLICATION

(11) **EP 0 796 893 A1**
(43) Date of publication of application: **24.09.1997**
(21) Application number: 97104322.9
(22) Date of filing: 13.03.1997
(51) Int. Cl.: C08L 9/00, B60C 1/00

(54) **Tire having silica reinforced tread**

(30) Priority: 22.03.1996 US 620205
(71) Applicant: THE GOODYEAR TIRE & RUBBER COMPANY, Akron, Ohio 44316-0001 (US)
(72) Inventor: Holtzapple, Gregory Martin, Kent, Ohio 44240 (DE); Verthe, John Joseph Andre, Kent, Ohio 44240 (DE)
(74) Representative: Leitz, Paul

(57) **Abstract**

The invention relates to a tire with a rubber tread which is quantitatively reinforced with silica where the tread rubber is composed of a basic rubber composition of high vinyl polybutadiene rubber, one or more isoprene/butadiene copolymer rubbers and cis 1,4-polyisoprene rubber.

Optionally, the said basic elastomer composition can also contain a minor amount of cis 1,4-polybutadiene rubber, 3,4-polyisoprene rubber and/or styrene/isoprene copolymer rubber.

## Description

### Field

This invention relates to a tire having a rubber tread which is quantitatively reinforced with silica. In one aspect, the tread rubber is comprised of a basic rubber composition of reinforced with a quantitative amount of silica or a combination of silica and carbon black in which the majority is silica. In one aspect, the basic tread rubber is required to be composed of high vinyl polybutadiene rubber, one or more isoprene/butadiene copolymers rubber and cis 1,4-polyisoprene rubber.

Optionally, the basic elastomer composition can contain a minor amount of cis 1,4-polybutadiene rubber, 3,4-polyisoprene rubber and/or styrene/isoprene copolymer rubber.

### Background

Pneumatic rubber tires are conventionally prepared with a rubber tread which can be a blend of various rubbers which is typically reinforced with carbon black.

In one aspect, rubbers are evaluated, selected and blended for a purpose of achieving desired tire tread properties and particularly, a balance of tire tread characteristic properties, mainly, rolling resistance, traction and wear.

For various applications utilizing rubber including applications such as tires and particularly tire treads, sulfur cured rubber is utilized which contains substantial amounts of reinforcing filler(s). Carbon black is commonly used for such purpose and normally provides or enhances good physical properties for the sulfur cured rubber. Particulate silica is also sometimes used for such purpose, particularly when the silica is used in conjunction with a coupling agent. In some cases, a combination of silica and carbon black is utilized for reinforcing fillers for various rubber products, including treads for tires.

Various rubber compositions have been prepared for various purposes, some of which have included tire treads, which contain a polybutadiene containing a degree of 1,2-configuration, sometimes referred to as vinyl content. Representative of such various compositions include those, for example, taught in various patent specifications such as U.S. Patent No. 3,937,681 relating to a tire tread of polybutadiene containing twenty-five to fifty percent of its monomer units in a 1,2-position. U.S. Patent No. 3,978,165 relates to a composition, taught to be useful for tire treads composed of (a) "medium vinyl" polybutadiene, (b) polybutadiene and (c) butadiene/styrene rubbers. German DE No. 2936-72 relates to mixtures of polybutadiene containing 35-70 percent of 1,2- units mixed with polyisoprene rubber and, optionally, with cis polybutadiene or styrene/butadiene rubber for tires. U.S. Patents Nos. 4,220,564 and 4,224,197 relate to combinations of polybutadiene containing at least seventy percent of 1,2-configuration with various other rubbers. U.S. Patent No. 4,192,366 relates to a tire with tread of a blend of cis-polyisoprene rubber and a medium vinyl polybutadiene rubber cured with an excess of sulfur. U.S. Patent No. 4,530,959 relates to a tire with tread composed of medium vinyl polybutadiene, cis 1,4-polyisoprene rubber and styrene/butadiene copolymer rubber in which the medium vinyl polybutadiene rubber can be prepared by polymerizing butadiene in the presence of a polar modifier and divinyl benzene in accordance with the teachings of U.S. Patent No. 4,230,841.

It is important to appreciate that, conventionally, carbon black is considered to be a more effective reinforcing filler for rubber tire treads than silica if the silica is used without a coupling agent.

Indeed, at least as compared to carbon black, there tends to be a lack of, or at least an insufficient degree of, physical and/or chemical bonding between the silica particles and the rubber elastomers to enable the silica to become a reinforcing filler for the rubber for most purposes, including tire treads, if the silica is used without a coupler. While various treatments and procedures have been devised to overcome such deficiencies, compounds capable of reacting with both the silica surface and the rubber elastomer molecule, generally known to those skilled in such art as coupling agents, or couplers, are often used. Such coupling agents, for example, may be premixed, or pre-reacted, with the silica particles or added to the rubber mix during the rubber/silica processing, or mixing, stage. If the coupling agent and silica are added separately to the rubber mix during the rubber/silica mixing, or processing stage, it is considered that the coupling agent then combines in situ with the silica.

In particular, such coupling agents are generally composed of a silane which has a constituent component, or moiety, (the silane portion) capable of reacting with the silica surface and, also, a constituent component, or moiety, capable of reacting with the rubber, particularly a sulfur vulcanizable rubber which contains carbon-to-carbon double bonds, or unsaturation. In this manner, then the coupler acts as a connecting bridge between the silica and the rubber and thereby enhances the rubber reinforcement aspect of the silica.

In one aspect, the silane of the coupling agent apparently forms a bond to the silica surface, possibly through hydrolysis, and the rubber reactive component of the coupling agent combines with the rubber itself. Usually the rubber reactive component of the coupler is temperature sensitive and tends to combine with the rubber during the final and higher temperature sulfur vulcanization stage and, thus, subsequent to the rubber/silica/coupler mixing stage and, therefore, after the silane group of the coupler has combined with the silica. However, partly because of typical temperature sensitivity of the coupler, some degree of combination, or bonding, may occur between the rubber-reactive component of the coupler and the rubber during an initial rubber/silica/coupler mixing stages and, thus, prior to a subsequent vulcanization stage.

The rubber-reactive group component of the coupler may be, for example, one or more of groups such as mercapto, amino, vinyl, epoxy, and sulfur groups, preferably a sulfur or mercapto moiety and more preferably sulfur.

Numerous coupling agents are taught for use in combining silica and rubber such as, for example, silane coupling agents containing a polysulfide component, or structure, such as bis-(3-triethoxysilylpropyl) tetrasulfide (e.g. U.S. Patent No. 3,873,489).

For silica reinforced tire treads, U.S. Patent No. 4,519,430 discloses a silica rich tire tread which contains solution or emulsion SBR, optionally with polybutadiene rubber and/or polyisoprene rubber together with a mixture of silica and carbon black, with silica being required to be a major component of the silica/carbon black reinforcing filler. U.S. Patent No. 5,409,969 discloses a rubber composition for a tire tread composed of silica and silane coupling agent with rubbers composed of polybutadiene or styrene/butadiene copolymer prepared with an organic alkali metal initiator and which may also contain other specified rubbers.

The term "phr" as used herein, and according to conventional practice, refers to "parts of a respective material per 100 parts by weight of rubber".

The terms such as "compounded rubber", "rubber compound" and "rubber composition" relate generally to "rubber which has been mixed with various rubber compounding ingredients". Such terms are well known to those skilled in the rubber mixing art, especially for tires.

The terms "vulcanized", "vulcanize", "cured" and "cure", if used herein, are used interchangeably to refer to "the vulcanization of rubber" and such terms are well known to those having a skill in the rubber vulcanization art.

The term "Tg", where used herein, refers to "a polymer's glass transition temperature" which is well known to those having skill in such art and is typically measured with a DSC, or differential scanning calorimeter, using a temperature rise of about 10°C a minute.

### Summary and Practice of the Invention

In accordance with this invention, a pneumatic tire is provided having a rubber tread where the tread rubber is comprised of, based on 100 parts by weight rubber, (A) about 85 to about 100 phr, preferably 100 phr, of elastomers, exclusive of styrene/butadiene copolymer elastomer, composed of (i) about 10 to about 50, preferably about 20 to about 40, phr of high vinyl polybutadiene rubber having a vinyl 1,2- content in a range of about 30 to about 95, preferably about 60 to about 90, percent, (ii) about 10 to about 50, preferably about 10 to about 40, phr of isoprene/butadiene copolymer elastomer selected from at least one of (a) isoprene/butadiene copolymer rubber having a Tg in a range of about -70°C to about -90°C, and an isoprene content in a range of about 5 to about 35, alternatively about 10 to about 35, weight percent, wherein its butadiene portion has a vinyl 1,2- content of less than about 10 percent, alternatively in a range of about 5 to about 10 percent, and its isoprene portion has a 3,4- content of less than about 5 percent and (b) isoprene/butadiene copolymer rubber having a Tg in a range of about -30°C to about -50°C with an isoprene content in a range of about 25 to about 55, alternatively about 40 to about 55, weight percent, wherein its butadiene portion has a vinyl 1,2- content in a range of about 20 to about 30 percent and its isoprene portion has a 3,4- content in a range of about 20 to about 30 percent, (iii) about 10 to about 50, preferably about 10 to about 40, phr of cis 1,4-polyisoprene rubber and (B) from zero up to about 15, alternatively about 10 to about 15, phr of at least one additional elastomer selected from cis 1,4-polybutadiene rubber having a vinyl content of less than about 5 percent, 3,4-polyisoprene rubber having a Tg in a range of about -10°C to about -30°C, alternatively about -15°C to about -25°C, and styrene/isoprene copolymer rubber containing about 70 to about 95 percent isoprene and having a Tg in a range of about -10°C to about -30°C, (C) about 35 to about 100, preferably about 35 to about 75, phr of reinforcing filler composed of precipitated silica and carbon black which is comprised of about 30 to about 70 phr silica and about 5 to about 30 phr of carbon black wherein the weight ratio of silica to carbon black is at least 1.1/1 and preferably in a range of about 1.5/1 to about 6/1, (D) at least one silica coupler having a moiety reactive with the surface of the silica and another, sulfur based, moiety interactive with said elastomer.

In one aspect, the ratio of silica to carbon black may be at least 1.5/1 and preferably in a range of about 2/1 to about 6/1.

Typically the weight ratio of the silica coupler to silica is in a range of about 0.05 to about 0.15.

In one aspect, the silica coupler has a silane moiety reactive with the surface of the silica, typically at least with SiOH groups on the surface of the silica, and another moiety reactive with said elastomer in a from of a polysulfide containing from 2 to about 6 sulfur atoms in its polysulfidic moiety.

In a further aspect of the invention, the said optional additional elastomer consists essentially of at least one of said cis 1,4-polybutadiene rubber, said 3,4-polyisoprene rubber and said styrene/isoprene copolymer rubber in an amount of about 10 to about 15 phr.

The rubber blends containing the aforesaid high silica loading, including the silica coupler, in combination with the defined three rubbers in their defined amounts, which is required to include the high vinyl polybutadiene rubber, isoprene/butadiene copolymer rubber and the cis 1,4-polyisoprene rubber is an important feature of the invention designed to enhance properties of a tire tread containing a substantial amount of silica reinforcement.

In one aspect, the high vinyl (HVBd) polybutadiene rubber is considered herein to be beneficial for considerably promoting treadwear and rolling resistance while substantially maintaining, or without significant or with only minimal loss of, traction.

The high vinyl polybutadiene can optionally be oil extended before mixing with various rubber compounding materials for ease of processing. If oil extension is used, usually about 15 to about 35 phr of rubber processing oil is used, usually of the aromatic or aromatic/napthenic oil type, to provide a ML-4 (100°C) viscosity for the elastomer in a range of about 40 to about 80.

While not necessarily a preferred aspect of the invention it is considered herein that sometimes a particular type of high vinyl polybutadiene rubber might be used, namely a branched high vinyl polybutadiene rubber. Such branched high vinyl polybutadiene rubber may be of the type prepared by polymerizing 1,3-butadiene with a very small amount of divinylbenzene in an essentially polar aromatic solvent with an alkyl lithium catalyst and at least one polar catalyst modifier as described in U.S. Patent No. 4,230,841.

The said (a) isoprene/butadiene copolymer elastomer is considered to be beneficial for use in this invention for promoting a reduction in tire rolling resistance while substantially maintaining treadwear, depending somewhat upon its isoprene content and its very low Tg in a range of about -70°C to about -90°C together with its very low vinyl 1,2-content in its butadiene portion and its practically non-existent 3,4- content in its isoprene portion. Such isoprene/butadiene copolymer rubber may be suitably prepared, for example, by copolymerizing isoprene and 1,3-butadiene in an organic solvent solution in the presence of an organolithium catalyst.

The said (b) isoprene/butadiene copolymer elastomer is considered to be beneficial for use in this invention for promoting an increase in tire tread traction, or skid resistance while substantially maintaining treadwear, depending somewhat upon its isoprene content, its relatively high Tg range of about -30°C to about -50°C, its relatively high vinyl 1,2-content in its butadiene portion of about 20 to about 30 percent and its relatively high 3,4- content in its isoprene portion of about 20 to about 30 percent. Such isoprene/butadiene may be prepared, for example, by copolymerizing isoprene and 1,3-butadiene monomers in an organic solution in the presence of an organolithium catalyst and modifier such as, for example, N,N'-tetramethylethylene diamine, sometimes referred to as "TMEDA".

In the practice of this invention, it is preferred to use the very low Tg isoprene/butadiene copolymer (a) rubber, namely a Tg in a range of about -70°C to about -90°C, with the very low vinyl 1,2-content in its butadiene portion.

While the said two types of isoprene/butadiene copolymer rubbers are both derived from isoprene and 1,3-butadiene monomers, they are substantially different in important respects as hereinbefore described, particularly as to their combination of Tg ranges and vinyl 1,2-contents.

In one aspect, it is contemplated herein that both of the two types of isoprene/butadiene copolymer rubbers may be present in the rubber composition so long as both the aforesaid high vinyl butadiene rubber and cis 1,4-polyisoprene rubber are also present. In such case, it is contemplated herein that a suitable weight ratio of isoprene/butadiene (a) to isoprene/butadiene (b) is in a range of about 1/4 to about 4/1, wherein copolymer rubbers is about 20 to about 50 phr and where each copolymer rubber is present in an amount of at least 10 phr.

The cis-1,4 polyisoprene rubber can be natural or synthetic rubber, preferably natural rubber, and is well known for use in rubber blends to those having skill in the rubber art.

The relatively small amount of said optional cis 1,4-polybutadiene rubber, if used as a minor inclusion with the said basic three elastomers, is considered herein to be beneficial for promoting the tire tread's treadwear.

Such cis 1,4-polybutadiene rubber can be prepared, for example, by organic solution polymerization of 1,3-butadiene.

The cis 1,4-polybutadiene rubber may be conventionally characterized, for example, by having at least a 90% cis 1,4-content and a minimal vinyl 1,2- content.

The relatively small amount of said optional, and relatively high Tg, 3,4-polyisoprene rubber and/or said styrene/isoprene copolymer rubber, if used individually or together as a minor inclusion with the said basic three elastomers, is considered herein to be beneficial to promote the tire tread's traction.

In practice, a balanced rubber blend of the said three basic elastomers is used and, it is appreciated that the blend of said high vinyl polybutadiene together with said isoprene/butadiene copolymer rubber and cis 1,4-polyisoprene rubber relies upon quantitative silica reinforcement which, in turn, relies on a silica coupler for the silica's reinforcing effect for the rubber blend.

The commonly employed siliceous pigments used in rubber compounding applications can be used as the silica in this invention, including pyrogenic and precipitated siliceous pigments (silica), although precipitated silicas are preferred.

The siliceous pigments preferably employed in this invention are precipitated silicas such as, for example, those obtained by the acidification of a soluble silicate, e.g., sodium silicate.

The BET surface area of the silica, as measured using nitrogen gas, is preferably in the range of about 100 to about 250, preferably about 120 to about 180, square meters per gram (m²/g). The BET method of measuring surface area is described in the Journal of the American Chemical Society, Volume 60, page 304 (1930).

The silica also typically has a dibutylphthalate (DBP) absorption value in a range of about 200 to about 400, and usually about 220 to about 300 cc/100 gm.

Various commercially available silicas may be considered for use in this invention such as, for example only and without limitation, silicas commercially available from PPG Industries under the Hi-Sil trademark with designations 210, 243, etc; silicas available from Rhone-Poulenc, with the designation of Zeosil 1165MP, silicas available from Degussa AG with designations VN2 and VN3, and BV3370GR and from J.M. Huber as, for example, Zeopol 8745.

It is important for this invention that the silica is used in combination with a silica coupler which has a moiety reactive with the surface of the silica (eg. SiOH) and another moiety, namely a poly sulfur, which can be interactive with the diene-based elastomers. While various couplers might be used, one such coupler is a bis-3-(trialkoxysilylalkyl) polysulfide having from 2 to about 6 sulfur atoms in its polysulfidic bridge, such as, for example, bis-3-(triethoxysilylpropyl) polysulfide having an average of from 3 to 4 sulfur atoms in its polysulfidic bridge.

It is readily understood by those having skill in the art that the rubber composition of the tread rubber would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typically additions of carbon black, for this invention, if used, are hereinbefore set forth. Typical amounts of tackifier resins, if used, comprise about 0.5 to about 10 phr, usually about 1 to about 5 phr. Typical amounts of processing aids comprise about 1 to about 50 phr. Such processing aids can include, for example, aromatic, napthenic, and/or paraffinic processing oils. Typical amounts of antioxidants comprise about 1 to about 5 phr. Representative antioxidants may be, for example, diphenyl-p-phenylenediamine and others, such as, for example, those disclosed in the Vanderbilt Rubber Handbook (1978), pages 344-346. Typical amounts of antiozonants comprise about 1 to about 5 phr. Typical amounts of fatty acids, if used, which can include stearic acid, comprise about 0.5 to about 3 phr. Typical amounts of zinc oxide comprise about 2 to about 5 phr. Typical amounts of waxes comprise about 1 to about 5 phr. Often microcrystalline waxes are used.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from about 0.5 to about 4 phr, with a range of from about 0.5 to about 2.5 being sometimes preferred.

Accelerators are used to control the time and/or temperature required for vulcanization and to improve the properties of the vulcanizate. Retarders are also used to control the rate of vulcanization. In one embodiment, a single accelerator system may be used, i.e., primary accelerator. Conventionally and preferably, a primary accelerator(s) is used in total amounts ranging from about 0.5 to about 4, alternatively about 1.2 to about 2.0, phr. In another embodiment, combinations of a primary and secondary accelerator might be used, with the secondary accelerator being used in amounts of about 0.05 to about 3 phr, for example, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent and accelerator(s) are not considered to be an aspect of this invention which is more primarily directed to the use of silica as a reinforcing filler in combination with a coupling agent.

The presence and relative amounts of the above additives are not considered to be an aspect of the present invention which is more primarily directed to the utilization of specified balanced blends of three elastomers, namely high vinyl polybutadiene rubber, isoprene/butadiene copolymer rubber and cis 1,4-polyisoprene rubber, in tire treads, in combination with silica and silica coupler.

The tire can be built, shaped, molded and cured by various methods which will be readily apparent to those having skill in such art.

The invention may be better understood by reference to the following examples in which the parts and percentages are by weight unless otherwise indicated.

### EXAMPLE I

A rubber composition (compounded rubber) was prepared of a blend of high vinyl polybutadiene rubber containing a vinyl content of about 65 percent, a isoprene/butadiene copolymer rubber with a low Tg of about -80°C and with less than 10 percent vinyl 1,2-content, and cis 1,4-polyisoprene natural rubber and referred to herein as "Sample B".

A control rubber composition composed of solution polymerization prepared styrene/butadiene copolymer rubber, said low Tg isoprene/butadiene copolymer rubber and said cis 1,4-polyisoprene rubber was prepared and identified herein as "Control Sample A".

The rubber compositions were prepared by mixing the ingredients in several stages, namely, two sequential non-productive stages (without the curatives), although one or more additional sequential mixing stages could be used, followed by a final productive stage (basically for adding and mixing the curatives), then the resulting composition was cured under conditions of elevated temperature and pressure.

The ingredients were mixed in each of the non-productive mixing stages for about five minutes to a temperature of about 165°C, all in a Banbury type of internal rubber mixer. To the resulting rubber composition (mixture) was then added, in the final, productive mixing stage, the remaining ingredients in a Banbury type of internal mixer for about two minutes to a temperature of about 110°C. The rubber was then extruded to form an unvulcanized tread strip, built onto a tire carcass and the resulting assembly vulcanized at a temperature of about 150°C for about 18 minutes.

The rubber compositions were comprised of the ingredients illustrated in Table 1. Table 2 illustrates properties of the cured rubber compositions.

**Table 1**

| Sample # | A | B |
|---|---|---|
| | | |

| Non-Productive Mix Stages | | |
|---|---|---|
| HVBD¹ | - | 35 |
| IBR² | 30 | 30 |
| NR³ | 35 | 35 |
| S-SBR⁴ | 35 | - |
| Processing oil, aromatic | 3 | 3 |
| Processing oil, napthenic | 9 | 9 |
| Fatty acid | 5 | 5 |
| Silica⁵ | 49 | 49 |
| Resins and waxes | 1.5 | 1.5 |
| Coupling agent⁶ | 9 | 9 |
| Zinc oxide | 3.5 | 3.5 |
| Antidegradant⁷ | 2.8 | 2.8 |

| Productive Mix Stage | | |
|---|---|---|
| Sulfur | 1.3 | 1.3 |
| Sulfenamide type accelerator(s) | 1.2 | 1.2 |

| | | |
|---|---|---|
| 1) A high vinyl polybutadiene rubber (HVBd) having a vinyl content of about 65 weight percent and a cis 1,4-content of about 16 percent obtained from The Goodyear Tire & Rubber Company. | | |
| 2) An isoprene/butadiene copolymer elastomer (IBR) having an isoprene content of about 30 percent, a Tg of about -80°C, its butadiene portion with a vinyl content of less than about 10 percent and its isoprene portion with a 3,4- content of less than about 5 percent, obtained from The Goodyear Tire & Rubber Company. | | |
| 3) Cis 1,4-polyisoprene natural rubber (NR) having a Tg of about -65°C. | | |
| 4) Solution polymerization prepared styrene/butadiene copolymer rubber (S-SBR) having a Tg of about -42°C obtained as SLF 1216 from The Goodyear Tire & Rubber Company | | |
| 5) A silica obtained as HiSil 210 from the PPG Industries company. | | |
| 6) A 50/50 blend of bis-3-triethoxysilylpropyl) polysulfide having an average of about 3 to 4 sulfur atoms in its polysulfidic bridge with N330 carbon black, available commercially as X50S from Degussa. | | |
| 7) Of the diarylparaphenylene diamine and dihydrotrimethylquinoline type, respectively. | | |

**Table 2**

| Sample # | A | B |
|---|---|---|
| | | |

| Rheometer (150°C) | | |
|---|---|---|
| Max. Torque, dNm | 41.4 | 44.3 |
| Min. Torque, dNm | 12.7 | 15 |
| T₉₀, minutes | 20.7 | 21.6 |
| T₂₅, minutes | 6.6 | 7.2 |
| Stress-Strain | | |
| Tensile Strength, MPa | 14.7 | 13.1 |
| Elongation at Break, % | 454 | 408 |
| 100% Modulus, MPa | 1.9 | 2.1 |
| 300% Modulus, MPa | 9 | 9.5 |

| Rebound | | |
|---|---|---|
| 23°C, (%) | 59 | 58 |
| 100°C (%) | 71 | 73 |

| Hardness (Shore A) | | |
|---|---|---|
| 23°C | 55 | 56 |
| 100°C | 52 | 53 |

| DIN Abrasion | | |
|---|---|---|
| DIN Abrasion Test (cm³ loss) | 87 | 86 |

| Dynamic Mechanical Properties | | |
|---|---|---|
| E' at 60°C, MPa | 5.6 | 5.6 |
| E' at 0°C, MPa | 9.6 | 10.6 |
| Tan. Delta at 60°C | 0.07 | 0.07 |
| Tan. Delta at 0°C | 0.13 | 0.14 |

The physical properties of the Sample B rubber composition of this invention, as compared to the Control Sample A rubber composition, are considered herein to be predictive of good tire rolling resistance, traction and treadwear properties.

In particular, the substantially equivalent rebound values and the tan. delta at 60°C values are considered herein to be predictive of substantially equivalent rolling resistance for a tire with a tread of the Sample B rubber composition, as compared to a tire with a tread of the Control Sample A rubber composition.

The substantially equivalent tan. delta at 0°C values are predictive of tire treads of substantially equivalent skid resistance.

The laboratory abrasion resistance values were substantially equivalent, however, it is considered herein that the abrasion test is not a good predictor of tire tread wear.

The above Sample B laboratory physical property data, based upon the rubber composition utilizing a high vinyl polybutadiene elastomer instead of the solution SBR (S-SBR) of Control Sample A is considered herein to predict an essentially equivalent or directionally improved rubber composition performance for a tire tread for the Sample B rubber composition of this invention.

### EXAMPLE II

Tires of size 205/60R15 were prepared of treads of Control Sample A and of Sample B rubber composition shown in Example I. The tires were tested for rolling resistance, traction and treadwear. The values for Control Tire A, corresponding to a tire with tread of rubber composition Sample A were normalized to a value of 100 and the values for Tire B, corresponding to a tire with tread to rubber composition Sample B, were compared therewith. The values are shown in the following Table 3.

**Table 3**

| Property | Control | |
|---|---|---|
| | Tire A | Tire B |
| Rolling Resistance | 100 | 100 |
| Wet Traction, average | 100 | 102 |
| Dry Traction, average | 100 | 100 |
| Treadwear | 100 | 110 |

These tire tests demonstrated that the treadwear was significantly improved for Tire B with a silica reinforced tread elastomer composition of this invention (a higher value represents an improved tire property), that wet traction was slightly improved (a higher value represents greater traction) and that the rolling resistance was basically equivalent.

The rolling resistance was determined by rotating the tire (mounted on a rim and inflated) under load by a dynamometer against a 67 inch (170 cm) diameter wheel. It is believed that such method is recognized by those having skill in such art.

The traction was determined by SAE J-345A procedure (with Macadam for the wet surface and the dry surfaces). It is believed that such method is recognized by those having skill in such art.

The treadwear was determined by measuring tread depths remaining after running the tires mounted on vehicles for a distance of about 28,000 miles (44,800 km) and calculating treadwear from such measurements. It is believed that such method is recognized by those having skill in such art.

While certain representative embodiments and details have been shown for the purpose of illustrating the invention, it will be apparent to those skilled in this art that various changes and modifications may be made therein without departing from the spirit or scope of the invention.

## Claims

1. A pneumatic tire having a rubber tread where the tread rubber is characterized by being comprised of, based on 100 parts by weight rubber, (A) about 85 to about 100 phr of elastomers, exclusive of styrene/butadiene copolymer elastomer composed of (i) about 10 to about 50 phr of high vinyl polybutadiene rubber having a vinyl 1,2- content in a range of about 30 to about 95 percent, (ii) about 10 to about 50 phr of isoprene/butadiene copolymer rubber selected from at least one of (a) isoprene/butadiene copolymer rubber having a Tg in a range of about -70°C to about -90°C and an isoprene content in a range of about 5 to about 35 weight percent, wherein its butadiene portion has a vinyl 1,2- content of less than about 10 percent and its isoprene portion has a 3,4- content of less than about 5 percent and (b) isoprene/butadiene copolymer rubber having a Tg in a range of about -30°C to about -50°C, an isoprene content in a range of about 25 to about 55 weight percent, wherein its butadiene portion has a vinyl 1,2- content in a range of about 20 to about 30 percent and with its isoprene portion has a 3,4- content in a range of about 20 to about 30 percent, (iii) about 10 to about 50 phr of cis 1,4-polyisoprene rubber and (B) from zero up to about 15 phr of at least one additional rubber selected from cis 1,4-polybutadiene rubber having a vinyl content of less than 5 percent, 3,4-polyisoprene rubber having a Tg in a range of about -10°C to about -30°C and styrene/isoprene copolymer elastomer having an isoprene content of about 50 to about 80 percent and a Tg in a range of about -10°C. to about -30°C., (C) about 35 to about 100 phr of reinforcing filler composed of precipitated silica and carbon black which is comprised of about 30 to about 70 phr silica and about 5 to about 30 phr of carbon black wherein said silica is the majority of said reinforcing filler and the weight ratio of silica to carbon black is at least about 1.1/1, and (D) at least one silica coupler having a moiety reactive with the surface of the silica and another, sulfur based, moiety interactive with said elastomer.

2. The pneumatic tire of claim 1 characterized in that the tread rubber is comprised of, based on 100 parts by weight rubber, (A) about 85 to about 100 phr of elastomers, exclusive of styrene/butadiene copolymer elastomer composed of (i) about 20 to about 40 phr of said high vinyl polybutadiene rubber having a vinyl 1,2- content in a range of about 60 to about 90 percent, (ii) about 10 to about 40 phr of said isoprene/ butadiene copolymer rubber selected from at least one of (a) isoprene/butadiene copolymer rubber having a Tg in a range of about -70°C to about -90°C, an isoprene content in a range of about 10 to about 35 weight percent, wherein its butadiene portion has a vinyl 1,2- content in a range of about 5 to about 10 percent and its isoprene portion has a 3,4- content of about less than about 5 percent, and (b) isoprene/butadiene copolymer rubber having a Tg in a range of about -30°C to about -50°C, an isoprene content in a range of about 40 to about 55 weight percent and wherein its butadiene portion has a vinyl 1,2- content in a range of about 20 to about 30 percent and its isoprene portion has a 3,4- content in a range of about 20 to about 30 percent, (iii) about 10 to about 40 phr of cis 1,4-polyisoprene rubber and (B) from zero up to about 15 phr of at least one rubber selected from said cis 1,4-polybutadiene rubber, said 3,4-polyisoprene rubber and said styrene/isoprene copolymer elastomer.

3. The tire of claim 1 or claim 2 characterized in that said isoprene/butadiene copolymer is both (a) said isoprene/butadiene copolymer rubber having a Tg in a range of about -70°C to about -90°C and an isoprene content in a range of about 10 to about 35 percent, wherein its butadiene portion has a vinyl 1,2- content in a range of about 5 to about 10 percent and (b) said isoprene/butadiene copolymer rubber having a Tg in a range of about -30°C to about -50°C and an isoprene content in a range of about 40 to about 55 percent, wherein its butadiene portion has a vinyl 1,2- content in a range of about 20 to about 30 percent; wherein the ratio of copolymer (a) to copolymer (b) is in a range of about 1/4 to about 4/1, wherein the total of the two copolymer rubbers is in a range of about 20 to about 50 phr and where each copolymer rubber is present in an amount of at least 10 phr.

4. The tire of any of the preceding claims characterized in that the tread rubber consists essentially of the said high vinyl polybutadiene rubber, said isoprene/butadiene copolymer rubber(s) and said cis 1,4-polyisoprene rubber as natural rubber.

5. The tire of any of the preceding claims 1-3 characterized in that said tread rubber contains about 5 to about 15 phr of at least one of said additional cis 1,4-polybutadiene rubber, 3,4-polyisoprene rubber and styrene/isoprene rubber.

6. The tire of any of the preceding claims 1-2 and 4-5 characterized in that said isoprene/butadiene copolymer rubber consists essentially of said isoprene/butadiene (a) having a Tg in a range of about -70°C to about -90°C, an isoprene content in a range of about 10 to about 35 weight percent, wherein its butadiene portion has a vinyl 1,2- content in a range of about 5 to about 10 percent.

7. The tire of any of the preceding claims 1-2 and 4-5 characterized in that said isoprene/butadiene copolymer rubber consists essentially of said isoprene/butadiene (b) having a Tg in a range of about -30°C to about -50°C, and an isoprene content in a range of about 40 to about 55 weight percent.

8. The tire of any of the preceding claims characterized in that the weight ratio of silica to carbon black is in a range of about 1.5/1 to about 6/1 and where said silica is characterized by having a BET surface area in a range of about 100 to about 250 m²/g and a DBP absorption value in a range of about 200 to about 400 cc/100 gm.

9. The tire of any of the preceding claims characterized in that the said coupler is a bis-3-(trialkoxysilylalkyl) polysulfide having from 2 to about 6 sulfur atoms in its polysulfidic bridge.
